# EUROPEAN PATENT APPLICATION

(11) **EP 2 289 846 A2**
(43) Date of publication of application: **02.03.2011**
(21) Application number: 08751062.4
(22) Date of filing: 17.04.2008
(51) Int. Cl.: C01B 3/48, C01B 3/40, B01J 23/63, H01M 8/00

(54) **METHOD FOR OBTAINING HYDROGEN**

(30) Priority: 13.04.2007 ES 200700993
(71) Applicant: Instituto Nacional De Tecnica Aeroespacial "Esteban Terradas", 28850 Torrejon De Ardoz (Madrid) (ES); Consejo Superior De Investigaciones Científicas, 28006 Madrid (ES); Fundación Cidaut, 47151 Boecillo (ES)
(72) Inventor: ROSA IGLESIAS, Manuel Felipe, E-28850 Torrejon De Ardoz (Madrid) (ES); GARCIA FIERRO, Jose Luis, E-28006 Madrid (ES); NAVARRO YERGA, Rufino Manuel, E-28006 Madrid (ES); ALVAREZ GALVAN, Maria Consuelo, E-28006 Madrid (ES); BRICEÑO BUENO, Yolanda, E-47151 Boecillo (Vallladolid) (ES)
(74) Representative: Carpintero Lopez, Francisco
(86) International application number: PCT/IB2008/001366
(87) International publication number: WO 2008/125976

(57) **Abstract**

The present invention relates to a method for producing hydrogen by oxidative reforming with water vapor and oxygen of diesel fuel with sulfur based on the use of a sulfur-tolerant catalytic system consisting of an active metal, selected from platinum, palladium, rhodium and ruthenium, supported on a mixture of aluminium, cerium and lanthanum oxides.

## Description

### Field of the Invention

The present invention is comprised within the field of chemical technology, more specifically within the area of energy and environmental catalysis. Thus a method for producing hydrogen by oxidative reforming of diesel fuel with sulfur is contemplated.

### Background of the Invention

A revolution in the methods for producing, storing and converting energy is taking place in recent years. In this sense, the use of fossil fuels, such as petroleum, carbon and natural gas, is the cornerstone on which the spectacular technological and industrial breakthrough experienced by the Western world since the middle of the past century has been based, but fossil fuel reserves are currently close to being used up and, furthermore, the excessive consumption rate of these fossil fuels causes significant damages to man and to the environment surrounding him.

For the purpose of palliating the environmental pollution caused by the combustion of hydrocarbons, technologies for producing hydrogen were started to be developed at the beginning of the 1970s in USA, Germany, Japan and Sweden. Hydrogen is considered to be the non-polluting energy vector par excellence of the future, both in thermal and electrochemical processes, since the sole product resulting from the oxidation is water vapor, without any type of polluting emission (NOₓ, SOₓ, CO, particles...).

Fuel cells are the ones with the best expectations among all the applications of hydrogen as fuel. A fuel cell can be defined as an electrochemical device which directly and continuously transforms the chemical energy stored by a fuel into electrical energy.

However, hydrogen is not found freely in nature, therefore, its production from organic substances containing it by means of chemical and/or electrochemical processes is necessary. Hydrogen is currently produced from a large variety of primary sources such as natural gas, naphthas, heavy fuel, biomass, carbon...

The current use of hydrogen as an energy vector faces different technical problems, among them, the problems with the size, weight and efficiency of the hydrogen storage systems make it difficult to achieve high energy densities in its storage. In order to deal with this problem, processes for producing hydrogen "in situ" and "on demand" from the reforming of molecules carrying high-energy density hydrogen, such as methanol, ethanol, gasolines or diesel can be used.

Processes for producing hydrogen from hydrocarbons are generally performed by means of catalytic partial oxidation (CₙH₂ₙ+nO₂n→H₂+nCO₂) or vapor reforming (CₙH₂ₙ+2nH₂O→3nH₂+nCO₂) processes. The vapor reforming process is a very efficient process which leads to high hydrogen productions. However external heat exchangers are required due to its high endothermicity. Also it is a process with slow kinetics, which involves high residence times of the reactants in the reactor and slow responses to the changes in the demand for hydrogen production. In contrast, the partial oxidation process offers exothermicity, simplicity in the design of the reactor and fast response to the changes of hydrogen production. However, this process has problems due to coke formation and its hydrogen production yield is lower, being able to decrease additionally due to losses of H₂ through its combustion.

An alternative to these methods is the oxidative reforming (or autothermal reforming) process in which the reaction of partial oxidation is combined with that of vapor reforming. In oxidative reforming, the thermal effects of the reaction can be directly controlled by adjusting the proportions of hydrocarbon, oxygen and water in the feed. Oxidative reforming combines the advantages of vapor reforming and partial oxidation, which allows a good hydrogen production yield, lower tendency for coke formation than in partial oxidation, good dynamic response and simplicity in the design of the reforming equipment.

In reforming processes, the process conditions (temperature, pressure and residence times) and the formulation of the catalyst depend on the type of hydrocarbon used as raw material. The catalysts normally used include a base metal (generally Ni), noble metals or mixtures thereof on inert ceramic substrates. However, when the molecular weight of the hydrocarbon to be reformed increases, the requirements demanded from the catalyst in terms of its thermal stability and its resistance to coke formation increase.

Diesel is an interesting option among the liquid fuels that can be reformed to produce hydrogen, taking into account its wide distribution network, its cost, its high energy density and easily handling.

The diesel fraction is a mixture of hydrocarbons which contains high proportions of heavy hydrocarbon compounds, polyaromatic compounds and compounds containing sulfur. Due to the presence of these compounds, the oxidative reforming of diesel fuels is a considerably greater challenge for catalysts than those derived from the conventional reforming of methane and light hydrocarbons (liquefied gases of petroleum, naphthas, gasoline,...), making the demands of resistance of the catalysts to sulfur poisoning and carbon depositions extraordinarily high.

In the reforming of heavy hydrocarbons the risk of carbon formation is much higher than in the case of methane *(*D.L. Trimm, "Coke formation and minimisation during steam reforming" Catalysis Today, No. 37. (1997) p. 233*).* The breaking kinetics of the C-H and C-C bonds in heavy hydrocarbons and polyaromatic hydrocarbons is significantly slower than in light hydrocarbons, such that the unreacted compounds tend to form carbon depositions on the surface of the catalysts, their activity decreasing.

On the other hand, the metal generally included in conventional reforming catalysts, Ni, is very susceptible to sulfur poisoning, causing its deactivation and degrading the efficiency in the conversion into hydrogen. Therefore, the application of conventional reforming catalysts to diesel feeds which include sulfur requires, due to the drastic loss of activity and selectivity that they experience because of their sulfur poisoning, a treatment prior to the feeds to eliminate the sulfur to values less than 0.1 ppm.

This need to eliminate the sulfur prior to the reforming involves the installation of an additional desulfurization unit which logically entails a greater complexity, volume and cost together with a lower energy efficiency of the overall process for producing hydrogen. Additionally, as the petroleum fraction becomes heavier, the difficulty for its desulfurization, and therefore the complexity and cost of the means for carrying it out, increases considerably.

For these reasons, the development of catalysts which are active, selective and stable in hydrogen production by oxidative reforming of hydrocarbons present in diesel in the presence of sulfur would allow simplifying and reducing the cost of the units for hydrogen production from diesel since desulfurization processes prior to the reforming, necessary with the use of conventional reforming catalysts, are prevented.

There are currently different documents describing different catalysts on which to carry out the oxidative reforming of sulfur-containing diesel. Thus, the article P.K. Chekatamarla and A.M. Lane. "Efficient bimetallic catalysts for hydrogen generation from diesel fuel': International Journal of Hydrogen Energy No. 30, (2005) p. 1277-1285, points out the use of bimetallic Pt-Ni and Pt-Pd formulations, supported on cerium oxide (CeO₂), as catalytic systems with resistance to the sulfur in the oxidative reforming of diesel with respect to the monometallic Pd or Ni formulations. In this document, the authors propose that the resistance to sulfur is due to a strong metal-metal and metal-support interaction which gives rise to the electronic modification of the metals.

Document US20020127445 describes active and stable catalysts in the oxidative reforming of fuels, including diesel, based on rhodium (Rh) supported on mixtures of ceria (CeO₂) and zirconium (Zr).

Likewise, the catalyst for the oxidative reforming of sulfur-containing diesel proposed by document US2002009408 involves the use of catalysts based on mixtures of Pt-Rh metals supported on refractory inorganic oxides (Al₂O₃, TiO₂, SiO₂ or zeolites), promoted with thermal stability elements (B₂O₃, Bi₂O₃, Ga₂O₃, alkaline oxides, alkaline earth oxides, group B oxides and rare earth oxides).

Documents US4503029 and US4414140 also describe catalytic formulations for their use in oxidative reforming processes from diesel fuels with sulfur. Catalysts based on Ni or Rh supported on aluminas (Al₂O₃) modified with Mg and/or La are defined in said documents.

Documents US4755489 and US4693882 describe catalysts based on Ir, Pd or Pt supported on aluminas stabilized with magnesium or lanthanum having improved activities with respect to conventional catalysts in the oxidative reforming of hydrocarbons in the presence of sulfur compounds.

On the other hand, the catalyst resistant to sulfur proposed by document W00107359 involves the use of catalysts based on Pt or Ru supported in perovskites of formula LaCoO₃. This document indicates that the stability of the catalysts in reaction is due to the surface decomposition of the catalyst under reaction giving rise to an active layer of La oxide and metal particles of Co preventing the fast deactivation of the catalyst due to carbon and/or sulfur deposition. Likewise, the article D.J. Liu and M. Kumpelt "Activity and structure of pevoskites as diesel-reforming catalysts for solid oxide fuel cell". International Journal of Applied Ceramic Technology No. 2(4) (2005) p.301-307 describes catalysts based on lanthanum perovskites (chromites and aluminites), partially substituted with Ru and Sr, active and stable in the autothermal reforming of mixtures of hydrocarbons containing 50 ppm of sulfur simulating diesel fuels.

Document W02004040672 describes a catalyst with the formula Pt-Pd-Rh/Al₂O₃-CeO₂-La₂O₃ for its use in oxidative reforming methods for obtaining hydrogen from diesel fuel in the presence of sulfur, basing its resistance to sulfur on the synergic effect of the three elements Pt-Pd-Rh.

However, there are desirable improvements of the previously described catalysts and processes of the state of the art, in relation to: (i) use of simple and low-cost active metallic formulations alternative to those based on bi- and trimetallic formulations as active phases, (ii) lower complexity in the formulation with the use of the smallest possible number of elements, and (iii) improvement of their activity and stability levels in hydrogen production.

Based on these needs of the state of the art, after an important research work, the authors of the present invention have developed an alternative method for the hydrogen production by oxidative reforming with water vapor and oxygen (autothermal reforming) of diesel fuel with sulfur based on the use of a catalytic system which is sulfur-tolerant and which consists of a specific formulation based on an active metal, selected from platinum, palladium, rhodium and ruthenium, supported on a mixture of aluminium, cerium and lanthanum oxides in suitable proportions.

The catalytic system used allows stably obtaining a high conversion of hydrocarbons in the presence of sulfur compounds, followed by a high hydrogen yield. This feature, together with the simplicity of the formulation of the catalyst, represents a breakthrough with respect to the different approaches performed in the state of the art, allowing improving the cost-effectiveness of the process for producing H₂ by means of oxidative reforming of sulfur-containing diesel fuels.

### Object of the Invention

The first object of the present invention is the development of an alternative method for producing hydrogen by oxidative reforming with water vapor and oxygen of diesel fuel with sulfur, based on the use of a sulfur-tolerant catalytic system.

A second object of the invention relates to the active, selective and sulfur-tolerant catalytic system used in said method which consists of an active metal, selected from platinum, palladium, rhodium and ruthenium, supported on a mixture of aluminium, cerium and lanthanum oxides.

The method for obtaining said catalytic system, as well as its use in the mentioned method for reforming diesel fuel is also an object of the invention.

### Detailed Description of the Invention

The present invention relates to catalytic hydrogen production from the oxidative reforming, with water and oxygen, of hydrocarbons with a boiling point in the diesel range in the presence of compounds with sulfur on a catalyst which is stable, active and selective in hydrogen production.

Thus, a main aspect of the present invention contemplates a method for producing hydrogen by oxidative reforming with water vapor and oxygen of diesel fuel with sulfur which comprises the use of a sulfur-tolerant catalytic system consisting of an active metal, selected from platinum, palladium, rhodium and ruthenium, supported on a mixture of cerium, lanthanum and aluminium oxides.

The catalytic system used in this method has a better performance in terms of activity and stability, due to the cooperative effect of cerium and lanthanum when they are simultaneously present, and when the latter is at a molar concentration with respect to the aluminium greater than 0.04.

In a preferred embodiment, the support which is a mixture of cerium, lanthanum and aluminium oxides has a cerium/lanthanum/aluminium percentage ratio varying between 10-20/16-50/30-74% by weight and always with a lanthanum/aluminium molar ratio greater than 0.04.

In particular embodiments of the invention, the aluminium oxide used in the formulation of the catalytic system of the method for reforming is in amorphous or crystalline form, preferably in alpha, delta or gamma crystalline form, more preferably in alpha or delta crystalline form. These mentioned crystalline forms are what provide better stability for the typical temperatures (700-900ºC) at which the oxidative reforming of diesel fuel is carried out.

In a preferred embodiment of the method, the active metal is platinum, incorporated on the support formed by the mixture of cerium/lanthanum/aluminium oxides. The platinum active phase is particularly deposited on the support in an amount comprised between 0.1 and 3% by weight, preferably between 0.5 and 1.5 %, and by any methodology of the state of the art giving rise to a high degree of dispersion of the Pt metal crystals. On the other hand, the support which is a mixture of Ce/La/Al oxides is made according to any methodology of the state of the art giving rise to a close contact between the oxides.

The activity of the catalysts described in the present invention is independent of the sulfur content in diesel fuels with a content of up to 100 ppm of sulfur. In preferred embodiments, the sulfur content of the diesel fuel used for obtaining H₂ in the reforming process contains between 10 and 50 ppm of sulfur.

Another aspect of the invention contemplates the sulfur-tolerant catalytic system used in the described process for producing hydrogen by oxidative reforming with water vapor and oxygen from diesel fuel with sulfur. This catalyst consists of an active metal selected from platinum, palladium, rhodium and ruthenium, supported on a mixture of cerium, lanthanum and aluminium oxides, preferably with a percentage ratio by weight of cerium/lanthanum/aluminium which varies respectively between 10-20/16-50/30-74%, the lanthanum/aluminium molar ratio always being greater than 0.04.

Another main aspect of the invention relates to a method for obtaining the described catalytic system which comprises the following steps:
a. depositing species of lanthanum on the aluminium oxide to obtain a mixture of lanthanum and aluminium oxides;
b. depositing species of cerium on the mixture of oxides obtained in a) to obtain a mixture of lanthanum, aluminium and cerium oxides; and
c. depositing species of an active metal, selected from platinum, palladium, rhodium and ruthenium, on the mixture of oxides obtained in b).

The lanthanum is added on the aluminium oxide by any of the methodologies known in the state of the art giving rise to a high degree of dispersion and interaction of the lanthanum with the aluminium atoms. In a particular embodiment, the lanthanum is deposited by means of the contact of the aluminium oxide with aqueous or organic solutions of lanthanum salts, species of lanthanum being deposited on the aluminium oxide by means of precipitation or impregnation methods, preferably by impregnation. After the deposition, the species of lanthanum are transformed into oxides by means of thermal treatment in a controlled air, vacuum or inert atmosphere.

Cerium is subsequently added on the aluminium and lanthanum oxides by any of the methodologies known in the state of the art giving rise to a high degree of dispersion and interaction of the cerium oxide on the lanthanum and aluminium oxides. In particular embodiments, cerium is deposited by means of the contact of the mixture of aluminium and lanthanum oxides with aqueous or organic solutions of cerium salts, species of cerium being deposited on the mixture of oxides by means of precipitation or impregnation, preferably by means of impregnation. After the deposition, the species of cerium are transformed into oxides by means of thermal treatment in a controlled air, vacuum or inert atmosphere.

Finally, the incorporation of the active metal occurs on the previously prepared support of Ce, La and Al oxides by means of the contact of said support with aqueous or organic solutions containing active metal salts, species of the active metal being deposited by means of precipitation or impregnation. After the deposition, the species of active metal are transformed by means of thermal treatment in a controlled air, vacuum or inert atmosphere. In the case of depositing phases of active metal in the form of oxide a reduction process by means of thermal treatment of the samples under a reducing stream (H₂ or CO) is necessary.

A final aspect of the invention relates to the use of the catalytic system described in the method for producing hydrogen by oxidative reforming with water vapor and oxygen from diesel fuel with a content of, preferably, up to 100 ppm of sulfur, more preferably between 10 and 50 ppm.

The main application of the present invention is in its use in "in-situ" hydrogen generation systems (reformers for supplying 5-100 m³/h), necessary for feeding fuel cells applied in the automotive sector or in the generation of electrical power for stationary use.

Furthermore, the need to reduce the NOₓ present in the emissions of the diesel vehicles appears as another important field of industrial application. The reduction of NOₓ emissions requires catalytic reduction systems using reducing gases. Therefore, the use of the catalytic system of the present invention in hydrogen generation systems from the actual diesel fuel appears as another solution for the needs for reducing gas with which the nitrogen oxides present in the exhausts of diesel vehicles can be eliminated.

The following examples illustrate the present invention, but must not be considered as a limitation to the essential aspects of the object thereof, as they have been set forth in the sections of this description.

### Example 1

This example illustrates the preparation of a catalyst "A" which is stable, active and selective in hydrogen production according to the present invention, with a Pt(1%)/Ce(19%)-La(24,5%)-Al(55.5%) (% by weight) chemical composition.

Lanthanum was introduced onto 3.5 g of commercial γ-Al₂O₃ (Alpha Aesar) by means of impregnation, at incipient humidity, with 35 ml of an aqueous solution of lanthanum nitrate (99.9% La(NO₃)₃·6H₂O, Johnson Matthey) with a concentration of 0.016 g La(NO₃)₃/ml H₂O. After the impregnation, the support with lanthanum was dried in air at 110°-C and subsequently heated at 1000°-C under air for 8 h. Cerium was added onto 3.3 g of this lanthanum-containing support by means of impregnation in a rotary evaporator with 13 ml of a solution of cerium nitrate (99.9%Ce(NO₃)₃·6H₂O, Johnson Matthey) with a concentration of 0.1 g Ce(NO₃)₃/ml H₂O. After the impregnation, the La and Ce-containing support was dried in air at 110°-C for 8h and was subsequently heated in air at 500°C for 4 h.

Platinum was introduced onto 1.73 g of the cerium and lanthanum-containing support by means of impregnation, with 4.4 ml of aqueous solution of H₂PtCl₆ (39.76% Pt, Johnson Matthey) with a concentration of 0.01 g H₂PtCl₆/ml H₂O. After the impregnation, the sample was dried in air at 110°C for 4 h and subsequently heated in air at 500°C for 3 h.

Prior to the reaction, the sample was reduced in the actual reactor under a H₂/N₂ stream (10/90 volume) at 350°-C for 2 h.

### Example 2

Following a method similar to the one described previously, in Example 1, catalysts of composition (% weight): Pt(1%)/Ce(19%)-Al(80%) and Pt(1%)/Ce(19%)-La(14%)-Al(66%), (catalysts "B" and "C" respectively) were prepared.

Comparative activity measurements were made on catalysts of composition "A", "B" and "C" for the purpose of showing the importance of: (i) the simultaneous presence of Ce and La in the catalytic formulation and (ii) the concentration of La₂O₃ in the catalytic formulation. The catalysts were tested at laboratory level in the oxidative reforming of a diesel fuel with 50 ppm of sulfur in the presence of air and water in a C:H₂O:O₂ molar ratio of 1:3:0.5, at a temperature of 800°- and 850°-C and under a volumetric spatial velocity of 14,000 h⁻¹. The results obtained in this comparative activity study are summarized in Table 1:

**Table 1. Comparative activity study of catalysts A, B and C, in the oxidative reforming of diesel with 50 ppm of sulfur for obtaining H₂.**

| Catalyst | | Time in reaction (min) | T (°C) | Hydrocarbon conversion (%) | H₂ production (mlNH₂/min) |
|---|---|---|---|---|---|
| "B" | Pt(1%)/Ce(19 %)-Al (80%) | | | | |
| | | 100 | 800 | 85.6 | 19.2 |
| | | 500 | 800 | 81.9 | 18.4 |
| | | 1500 | 800 | 68.9 | 7.9 |
| "C" | Pt(1%)/Ce(19 %)-La(14%)-Al (66%) | | | | |
| | | 100 | 800 | 88.2 | 14.0 |
| | | 500 | 800 | 75 | 14.0 |
| | | 1500 | 800 | 68 | 7.8 |
| | | 100 | 850 | 97.2 | 23.2 |
| | | 300 | 850 | 96.9 | 21.5 |
| | | 1500 | 850 | 93.8 | 18.4 |
| | | 3000 | 850 | 87.0 | 12.9 |
| "A" | Pt(1%)/Ce(19 %)- La(24.5%)-Al (55.5%) | | | | |
| | | 100 | 850 | 98 | 25.3 |
| | | 300 | 850 | 97.0 | 25.3 |
| | | 1500 | 850 | 92.8 | 23.7 |
| | | 3000 | 850 | 93.1 | 21.0 |

The comparative activity tests clearly showed the substantial improvement in the stability level of the catalyst proposed in the invention ("A") (Pt(1%)/Ce(19%)-La(24.5%)-Al(55.5%)), with respect to the one containing Al and Ce ("B") (Pt(1%)/Ce(19%)-Al(80%)), and the one containing Ce and La simultaneously but with a La/Al molar ratio less than 0.04 ("C") (Pt(1%)/Ce(19%)-La(14%)-Al(34%)).

Despite the fact that the effects of: (i) the use of supports with O₂ mobility, such as CeO₂, in the improvement of the resistance of catalysts based on noble metals in the oxidative reforming of hydrocarbons in the presence of sulfur and (ii) the use of lanthanum to stabilize alumina against the loss of surface area induced by high temperature, are known in the state of the art, the results obtained illustrate the better performance in terms of activity and stability of the catalyst developed in the invention due to a cooperative effect of the Ce and La when the latter is at a molar concentration with respect to the Al greater than 0.04.

### Example 3

The catalyst of composition "A", illustrative of the present invention, was used in the reaction of oxidative reforming of mixtures of hydrocarbons present in diesel (hexadecane, tetralin, decalin and dibenzothiophene) simulating a typical diesel composition with variable amounts of sulfur (0-50-100 ppm). The oxidative reforming of the mixture of diesel hydrocarbons was performed in the presence of air and water in a C:H₂O:O₂ molar ratio of 1:3:0.5, at a temperature of 850° C and under a volumetric spatial velocity of 14000 h⁻¹. The results of the tests are summarized in Table 2.

**Table 2. Activity study of catalyst "A" in the oxidative reforming of a mixture of HCs present in diesel, with variable amounts of S, for obtaining H₂.**

| Sulfur in feed (ppm) | Time in reaction (min) | Hydrocarbon conversion (%) | H₂ production (mlNH₂/min) |
|---|---|---|---|
| 0 | 300 | 100 | 21.2 |
| | 500 | 100 | 21.5 |
| | 1500 | 100 | 21.1 |
| 50 | 300 | 100 | 18.0 |
| | 400 | 100 | 18.4 |
| | 1500 | 100 | 18.3 |
| 100 | 300 | 100 | 18.1 |
| | 1500 | 100 | 18.5 |

These activity results obtained clearly showed that catalyst "A" of the invention preserves most of its activity against large amounts of sulfur (50-100 pm) (85% of the value obtained compared to mixtures with the absence of S). Thus, said catalyst showed a high activity and stability, independently of the amount of sulfur present in the feed, thus demonstrating its high capacity of resistance to sulfur poisoning.

Tests similar to the previous one of oxidative reforming of mixtures of hydrocarbons present in diesel in the presence of sulfur (50 ppm) on several catalysts of the state of the art claimed for reforming hydrocarbons with high sulfur content (Pt on alumina stabilized with lanthanum according to US4755498 and Ni on alumina modified with La according to US4503029) showed high deactivation levels (loss of more than 80% of the initial activity thereof) in the first 24 hours of operation compared to the stable hydrogen production values obtained under the same conditions on the catalyst representative of the present invention.

## Claims

1. Method for producing hydrogen by oxidative reforming with water vapor and oxygen of diesel fuel with sulfur, **characterized in that** it comprises the use of a sulfur-tolerant catalytic system consisting of an active metal, selected from platinum, palladium, rhodium and ruthenium, supported on a mixture of cerium, lanthanum and aluminium oxides.

2. Method according to claim 1, **characterized in that** the catalytic system has a lanthanum/aluminium molar ratio greater than 0.04.

3. Method according to claim 2, **characterized in that** the catalytic system has a cerium/lanthanum/aluminium percentage ratio varying between 10-20/16-50/30-74% by weight.

4. Method according to any of the previous claims, **characterized in that** the aluminium oxide is in amorphous or crystalline form.

5. Method according to claim 4, **characterized in that** the aluminium oxide is in alpha, delta or gamma crystalline form.

6. Method according to claim 5, **characterized in that** the aluminium oxide is in alpha or delta crystalline form.

7. Method according to any of the previous claims, **characterized in that** the active metal is platinum.

8. Method according to claim 7, **characterized in that** the platinum is in an amount comprised between 0.1 and 3% by weight.

9. Method according to claim 8, **characterized in that** the platinum is in an amount comprised between 0.5 and 1.5% by weight.

10. Method according to any of the previous claims, **characterized in that** the diesel fuel contains up to 100 ppm of sulfur.

11. Method according to claim 10, **characterized in that** the diesel fuel contains between 10 and 50 ppm of sulfur.

12. Sulfur-tolerant catalytic system in processes for producing hydrogen by oxidative reforming with water vapor and oxygen from diesel fuel with sulfur, which consists of an active metal selected from platinum, palladium, rhodium and ruthenium, supported on a mixture of aluminium, cerium and lanthanum oxides, **characterized in that** it has a Lanthanum/Aluminium molar ratio greater than 0.04.

13. Catalytic system according to claim 12, **characterized in that** it has a cerium/lanthanum/aluminium percentage ratio varying between 10-20/16-50/30-74% by weight.

14. Catalytic system according to any of claims 12 or 13, **characterized in that** the aluminium oxide is in amorphous or crystalline form.

15. Catalytic system according to claim 14, **characterized in that** the aluminium oxide is in alpha, delta or gamma crystalline form.

16. Catalytic system according to claim 15, **characterized in that** the aluminium oxide is in alpha or delta crystalline form.

17. Catalytic system according to claims 12-16, **characterized in that** the active metal is platinum.

18. Catalytic system according to claim 17, **characterized in that** the platinum is in an amount comprised between 0.1 and 3% by weight.

19. Catalytic system according to claim 18, **characterized in that** the platinum is in an amount comprised between 0.5 and 1.5% by weight.

20. Method for obtaining a catalytic system according to claims 12-19, **characterized in that** it comprises the following steps:
a. depositing species of lanthanum on the aluminium oxide to obtain a mixture of lanthanum and aluminium oxides;
b. depositing species of cerium on the mixture of oxides obtained in a) to obtain a mixture of lanthanum, aluminium and cerium oxides;
c. depositing species of an active metal, selected from platinum, palladium, rhodium and ruthenium, on the mixture of oxides obtained in b).

21. Method according to claim 20, **characterized in that** the deposition of lanthanum in a) and the deposition of cerium in b) are carried out by means of precipitation or impregnation.

22. Method according to claim 21, **characterized in that** the deposition is carried out by means of impregnation.

23. Use of a catalytic system according to claims 12-19 in a method for producing hydrogen by oxidative reforming with water vapor and oxygen from diesel fuel with sulfur.

24. Use of a catalytic system according to claim 23, **characterized in that** the diesel fuel contains up to 100 ppm of sulfur.

25. Use of a catalytic system according to claim 24, **characterized in that** the diesel fuel contains between 10 and 50 ppm of sulfur.
